# EUROPÄISCHE PATENTSCHRIFT

(11) **EP 1 396 327 B1**
(45) Veröffentlichungstag und Bekanntmachung des Hinweises auf die Patenterteilung: **12.12.2007**
(21) Anmeldenummer: 03019222.3
(22) Anmeldetag: 26.08.2003
(51) Int. Cl.: B29C 45/16, B60K 15/035, F16L 47/20, F16L 47/28

(54) **Kupplungsstück zum Verbinden eines Kraftstofftanks mit einer Fluidleitung und Verfahren zu dessen Herstellung**
Fitting for the connection of a fuel tank with a fluid conduit and process for its manufacture
Raccord pour la connection d'un réservoir de carburant au conduit de fluide et son procédé de fabrication

(30) Priorität: 03.09.2002 DE 10240521
(43) Veröffentlichungstag der Anmeldung: 10.03.2004
(73) Patentinhaber: NORMA Germany GmbH, 63277 Maintal (DE)
(72) Erfinder: Kertesz, Janos, 65719 Hofheim (DE)
(74) Vertreter: Knoblauch, Andreas

(56) Entgegenhaltungen:
- EP-A- 1 063 078
- EP-A- 1 241 039
- WO-A-00/73039
- WO-A-01/61233
- WO-A-01/62535
- WO-A-01/90609
- US-A1- 2001 050 478
- US-A1- 2002 117 206
- US-B1- 6 289 915
- EIGL F A ET AL: "MEHR VERSTAENDNIS FUER DEN KERN" , KUNSTSTOFFE, CARL HANSER VERLAG. MUNCHEN, DE, VOL. 88, NR. 1, PAGE(S) 46-48,50 XP000729799 ISSN: 0023-5563 * Seite 48, linke Spalte, Absatz 3 *
- JAROSCHEK C: "APPETIT AUF SANDWICH?" , KUNSTSTOFFE, CARL HANSER VERLAG. MUNCHEN, DE, VOL. 87, NR. 1, PAGE(S) 33-35 XP000640784 ISSN: 0023-5563 * Seite 34, rechte Spalte, Absatz 1 *

## Beschreibung

Die Erfindung bezieht sich auf ein Kupplungsstück, insbesondere einen rohrartigen Stutzen, zum Verbinden eines der Aufnahme oder Abgabe von Kraftstoff dienenden Bauteils aus vorwiegend HDPE mit einer Fluidleitung, wobei das Kupplungsstück eine erste, zweite und dritte Komponente aus vorwiegend schmelzbarem Material, insbesondere thermoplastischem Kunststoff, aufweist, von denen die dritte Komponente mit HDPE eine Schmelzverbindung eingeht und eine unerwünscht hohe Durchlässigkeit und Quellfähigkeit gegenüber Kraftstoff aufweist und mit der ersten Komponente stoff- und formschlüssig verbunden ist, während die zweite Komponente eine höhere Sperrfähigkeit und geringere Quellfähigkeit gegenüber Kraftstoff und eine höhere Festigkeit als die dritte Komponente aufweist, wobei die erste Komponente mit einem Flansch geformt ist, der die dritte Komponente übergreift und mit der dritten Komponente verschmolzen ist.

Ein derartiges Kupplungsstück ist aus der EP-A2-1 063 078 bekannt.

Bei einem anderen bekannten Kupplungsstück (DE 195 35 413 C1) besitzen zwar die erste und zweite Komponente eine hohe Undurchlässigkeit (Impermeabilität) gegen ein Hindurchdiffundieren von Kraftstoff, wie Benzin oder Dieselöl, aber nicht die mit dem Bauteil, einem Kraftstofftank, verschweißte dritte Komponente. Denn die dritte Komponente muß immer so gewählt sein, daß sie mit dem Kraftstofftank eine Schmelzverbindung eingeht, der in der Regel überwiegend, zumindest in einer Außenschicht, HDPE (hochdichtes Polyethylen) aufweist, das nicht hinreichend impermeabel gegen ein Hindurchdiffundieren von Kraftstoff ist. Die pro Zeiteinheit durch die dritte Komponente hindurchdiffundierende Kraftstoffmenge ist zwar gering, über längere Zeit jedoch nicht vernachlässigbar. Darüber hinaus hat die dritte Komponente eine unerwünscht hohe Quellfähigkeit gegenüber Kraftstoff und eine geringe Rißbeständigkeit. Wenn die dritte Komponente aufquillt, kann das Kupplungsstück vom Tank abreißen.

Aus der EP-A-1 063 078 ist es ferner bekannt, einen Rohrstutzen dadurch herzustellen, daß im Sandwich-Spritzgießverfahren durch die noch plastische Seele einer äußeren, mit einem Kunststoff-Tank verschweißbaren Haut-Komponente eine diffusionsdichte Kernkomponente vollständig hindurchgespritzt wird.

Der Erfindung liegt die Aufgabe zugrunde, ein Kupplungsstück der eingangs genannten Art dahingehend zu verbessern, daß es weniger Kraftstoff pro Zeiteinheit hindurchdiffundieren läßt und eine geringere Quellfähigkeit, aber höhere Festigkeit als bisher aufweist.

Erfindungsgemäß ist diese Aufgabe dadurch gelöst, daß die zweite Komponente vollständig oder überwiegend in der dritten Komponente eingeschlossen ist indem die zweite Komponente in die noch plastische Seele dem dritten Komponente eingespritzt worden ist, oder die zweite und dritte Komponente vermischt sind, und daß das Verhältnis der Volumina der zweiten und dritten Komponente so gewählt ist, daß der Anteil des Volumens der dritten Komponente am Gesamtvolumen der zweiten und dritten Komponente geringer als der der zweiten Komponente ist.

Bei dieser Lösung verhindert die zweite Komponente weitgehend ein Hindurchdiffundieren von Kraftstoff durch die dritte Komponente und deren Quellung durch die Aufnahme von Kraftstoff. Eine geringere Quellung erhöht die Festigkeit der Verbindung zwischen der dritten Komponente und dem der Aufnahme und Abgabe von Kraftstoff dienenden Bauteil. Das Maß der Quellung wird außerdem dadurch verringert, daß der Anteil des Volumens der dritten Komponente am Gesamtvolumen der zweiten und dritten Komponente geringer als der der zweiten Komponente ist. Dementsprechend ist auch die Gesamtfestigkeit der Kombination aus der zweiten und dritten Komponente höher als die der dritten Komponente allein. Die zweite und dritte Komponente sind durch das "in die plastische Seele" -Einspritzen oder Vermischen zugleich stoff- und formschlüssig verbunden. Denn, da beim Einspritzen der zweiten Komponente in die noch plastische Seele der dritten Komponente an den Grenzflächen beider Komponenten Wellen oder Verwirbelungen auftreten, ergibt sich durch das Einspritzen nicht nur eine stoffschlüssige Verbindung durch das Verschmelzen der zweiten und dritten Komponente, sondern auch eine formschlüssige Verbindung zwischen beiden Komponenten.

Während die erste Komponente wenigstens eines der Materialien PA, POM, PBT, PEN, PET, PBN, PPS, PPA, PP, aliphatisches Polyketon, LCP und Fluorthermoplast aufweisen kann, kann die zweite Komponente wenigstens eines der Materialien EVOH, PBT, PEN, PET, PBN, POM, PA, PPS, PPA, LCP, aliphatisches Polyketon und Fluorthermoplast oder wenigstens ein Metall oder Glas und die dritte Komponente ein Polyolefin, insbesondere funktionalisiertes Polyethylen, aufweisen, das mit dem Material des Bauteils verschmelzbar ist.

Die zweite Komponente kann derart modifiziert sein, daß die zweite und dritte Komponente miteinander und mit dem Bauteil verschmelzbar sind. Wenn das Bauteil dann HDPE aufweist, können die zweite oder dritte Komponente oder beide Komponenten mit dem HDPE des Bauteils durch Reibschweißen oder Spiegelschweißen verbunden werden.

Ferner kann die Form der zweiten Komponente in der dritten Komponente so gewählt sein, daß 10 bis 100% des für Kraftstoff durchlässigen Querschnitts der dritten Komponente durch die zweite Komponente abgedeckt sind.

Insbesondere können die zweite und die dritte Komponente ringförmig sein. Das Kupplungsstück ist dann besonders zur Verbindung mit der Öffnung eines Behälters, insbesondere eines Tanks, geeignet.

Hierbei kann die erste Komponente rohrförmig und von der dritten Komponente umgeben sein. Dabei kann die rohrförmige Komponente gleichzeitig für den Anschluß der Fluidleitung geformt sein, z.B. mit ein oder mehreren Halterippen, auf denen eine als Schlauch ausgebildete Fluidleitung festgeklemmt wird.

Das Kupplungsstück kann, je nach Anwendungsfall, die verschiedensten Formen aufweisen. So kann es gleichzeitig einen Anschlußstutzen, ein Gehäuse eines Ventils, einen Einfüllstutzen oder einen Befestigungsflansch für eine Kraftstoffpumpe bilden.

Wenn die dritte Komponente mit der ersten Komponente teilweise umspritzt ist, kann das Formen der dritten Komponente und das Einspritzen der plastischen zweiten Komponente in die noch plastische Seele der dritten Komponente mittels desselben Formwerkzeugs erfolgen. Ferner ergibt das Umspritzen der dritten Komponente mit der ersten Komponente auf einfache Weise eine stoff- und formschlüssige Verbindung zwischen der ersten und dritten Komponente.

Um zu verhindern, daß die dritte Komponente beim Einspritzen der zweiten Komponente durch eine zu hohe Temperatur der zweiten Komponente zersetzt wird, ist die Verarbeitungstemperatur der zweiten Komponente kleiner als die Zersetzungstemperatur der dritten Komponente gewählt.

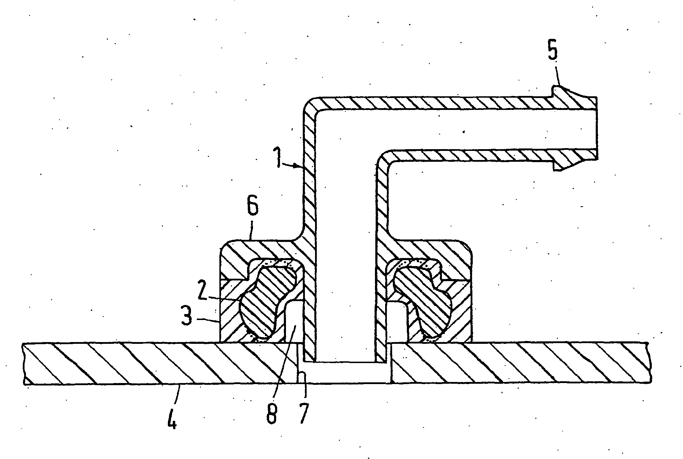

Die Erfindung und ihre Weiterbildungen werden nachstehend anhand der beiliegenden Zeichnung eines bevorzugten Ausführungsbeispiels näher beschrieben.

Die einzige Figur stellt einen Querschnitt durch ein Ausführungsbeispiel eines erfindungsgemäßen Kupplungsstücks dar, das mit dem Öffnungsrand eines teilweise dargestellten Bauteils in Form eines Kraftstoffbehälters verbunden ist.

Im einzelnen besteht das Kupplungsstück aus einer ersten Komponente 1, einer zweiten Komponente 2 und einer dritten Komponente 3, die aus vorwiegend schmelzbarem Material, im dargestellten Beispiel aus vorwiegend thermoplastischem Kunststoff, bestehen und miteinander stoff- und formschlüssig verbunden sind.

Die Komponente 3 und das Bauteil 4 sind ebenfalls stoffschlüssig durch Reibschweißen oder Spiegelschweißen miteinander verbunden, wobei diese Art der Verschweißung eine Schmelzverbindung zwischen der Komponente 3 und dem Bauteil 4 ergibt.

Die Komponente 1 ist ein etwa rohrförmiger, um 90° abgewinkelter Stutzen mit einer Halterippe 5 in der Nähe seines Endes, über die ein Schlauch hinweggeschoben und mittels einer Schlauchschelle auf dem Rohrstutzen befestigt wird. Statt nur einer Halterippe 5 können auch mehrere Halterippen hintereinander angeordnet sein. Darüber hinaus hat die Komponente 1 einen Flansch 6, der die Komponente 3 übergreift, und einen bis in eine Öffnung 7 des Bauteils 4 durch die Komponente 3 hindurchragenden Abschnitt, um das Kupplungsstück beim Anschweißen an das Bauteil 4 relativ zu der Öffnung 7 zu zentrieren.

Die Komponente 2 ist ebenso wie die Komponente 3 ringförmig und bei der Formung der Komponente 3 im Sandwich-spritzgußverfahren in deren noch plastische Seele etwa koaxial zur Komponente 3 eingespritzt worden, wonach die Komponente 1 teilweise um die Komponente 3 herumgespritzt wurde, so daß die ringförmige Komponente 3 den rohrförmigen Stutzen umgibt und zwischen dem Flansch 6 und dem Zentrierungsfortsatz der Komponente 1 eingekammert ist.

Das Einspritzen der Komponente 2 in die Komponente 3 hat den Vorteil, daß man zur Formung beider Komponenten 2 und 3 mit demselben Formwerkzeug auskommt. Darüber hinaus treten beim Einspritzen der Komponente 2 in die Komponente 3 an den sich relativ zueinander bewegenden Grenzflächen Wellen und/oder Wirbel auf, die eine formschlüssige Verbindung zwischen den beiden Bauteilen 2 und 3 ergeben.

Die Komponente 2 kann vollständig von der Komponente 3 umgeben sein oder bis zur Verbindungsfläche zwischen der Komponente 3 und dem Bauteil 4 reichen, so daß die Komponente 2 und das Bauteil 4 sich allenfalls geringfügig berühren, wie es durch die untere punktierte Linie in der Zeichnung angedeutet ist. Alternativ oder zusätzlich kann die Komponente 2 auch bis zum Flansch 6 reichen, so daß sich die Komponente 2 und der Flansch 6 der Komponente 1 geringfügig berühren, wie es durch die obere punktierte Linie angedeutet ist.

Das Material des Bauteils 4 besteht bei einem Kraftstoffbehälter zumindest an seiner Außenseite aus HDPE (hochdichtem Polyethylen), durch das Kraftstoffe, wie Benzin oder Dieselöl, hindurchdiffundieren können. Um das Hindurchdiffundieren zu verhindern, ist in der Wand des Bauteils 4 eine nicht dargestellte, für Kraftstoffe nicht durchlässige Zwischenschicht angeordnet.

Um mit dem Material des Bauteils 4 eine Schmelzverbindung zu ermöglichen, enthält auch die Komponente 3 überwiegend ein Polyolefin, insbesondere ein funktionalisiertes Polyethylen (PE), das mit dem HDPE des Bauteils 4 eine Schmelzverbindung eingeht, während sie miteinander durch Reibschweißen oder Spiegelschweißen verschweißt werden. In der Regel handelt es sich bei der Komponente 3 ebenfalls überwiegend um HDPE. Das funktionalisierte PE oder HDPE der Komponente 3 hat ebenfalls keine hinreichende Sperrfähigkeit gegen ein Hindurchdiffundieren von Kraftstoff oder generell Kohlenwasserstoffen. Die Undurchlässigkeit bzw. Sperrfähigkeit gegen ein Hindurchdiffundieren von Kraftstoffen wird dadurch erreicht, daß die Komponente 2 vollständig oder überwiegend in der Komponente 3 eingeschlossen ist, wie es dargestellt ist. Generell ist mithin das Verhältnis der Volumina der Komponenten 2 und 3 so gewählt, daß die Gesamteigenschaften der beiden Komponenten 2 und 3 in Kombination hinsichtlich ihrer Kraftstoffdurchlässigkeit, Festigkeit und Volumenänderung durch Quellung denjenigen der Komponente 2 angenähert sind. Dadurch wird auch die Gesamtfestigkeit beider Komponenten 2 und 3 erhöht und die Quellfähigkeit der Kombination beider Komponenten 2 und 3 durch die geringere Quellfähigkeit der Komponente 2 als die der Komponente 3 gegenüber Kraftstoff verringert.

Zwischen den Komponenten 1 und 3 ist ferner ein geringfügiger Freiraum 8 belassen, in den beim Verschweißen der Komponente 3 und des Bauteils 4 an den Rändern ihrer Verbindungsflächen austretende Schmelze ausweichen kann.

Besonders geeignet als Komponente 1 ist wenigstens eines der Materialien Polyamid (PA), Polyoxymethylen (POM), Polybutylenterephthalat (PBT), Polyethylenterephthalat (PET), Polyethylennaphthalat (PEN), Polybutylennaphthalat (PBN), Polyphenylensulfid (PPS), Polyphtalamid (PPA), d.h. ein partiell aromatisches Polyamid, Polypropylen (PP), aliphatisches Polyketon, flüssigkristallines Polymer (LCP) und Fluorthermoplast.

Die Komponente 2 enthält wenigstens eines der Materialien Ethylenvinylalkohol (EVOH), PBT, PEN, PET, PBN, POM, PA, PPS, PPA, LCP, aliphatisches Polyketon und Fluorthermoplast. Alternativ kann die Komponente 2 auch wenigstens ein Metall (eine Metallegierung) oder Glas aufweisen.

Die Komponenten 1 und 2 haben mithin eine hohe Sperrfähigkeit gegenüber einem Hindurchdiffundieren von Kohlenwasserstoffen, wie Benzin oder Dieselöl.

Statt die zweite Komponente in die dritte einzuspritzen, können beide Komponenten auch vermischt sein.

Generell ist die Form der Komponente 2 in der Komponente 3 so gewählt, daß 10 bis 100% des für Kraftstoff durchlässigen Querschnitts der Komponente 3 durch die Komponente 2 abgedeckt sind.

Wenn die Kombination der Komponenten 2 und 3 so gewählt ist, daß die Komponente 2 eine höhere Wärmeformbeständigkeit, einen höheren Schmelzpunkt und eine höhere Festigkeit bei höheren Temperaturen als HDPE aufweist, ergibt sich nicht nur eine höhere Formstabilität der Komponente 3, sondern auch eine höhere Formstabilität des gesamten Kupplungsstücks.

Die Verarbeitungstemperatur der Komponente 2 wird stets so gewählt, daß sie kleiner als die Zersetzungstemperatur der Komponente 3 ist. Ferner ist die Gesamtquellfähigkeit der Kombination der Komponenten 2 und 3 kleiner als die der Komponente 3 allein.

Die Komponenten 1 bis 3 können verstärkt sein, und zwar durch Fasern, z.B. Glas-, Kunststoff- oder Mineralfasern oder sogenannter Nanopartikel aus Mineralien.

Mindestens eine der drei Komponenten 1 bis 3 kann vernetzt sein, um ihre Undurchlässigkeit gegenüber Kraftstoffen zu verbessern. Wenn die Komponenten 2 und 3 vernetzt sind, verschmelzen sie besser.

Das erfindungsgemäße Kupplungsstück kann nicht nur als Anschlußstutzen für eine Fluidleitung, sondern auch als Gehäuse eines Rückschlagventils, eines sogenannten Überroll-Ventils, dienen, wie es häufig in der Einlaßöffnung eines Kraftfahrzeug-Tanks gegen ein Ausströmen des Kraftstoffs bei sich überschlagendem Kraftfahrzeug vorgesehen ist, oder als Einfüllstutzen eines Behälters dienen oder als Befestigungsflansch für eine Kraftstoffpumpe in einem Kraftstofftank ausgebildet sein.

## Patentansprüche

1. Kupplungsstück, insbesondere rohrartiger Stutzen, zum Verbinden eines der Aufnahme oder Abgabe von Kraftstoff dienenden Bauteils (4) aus vorwiegend HDPE mit einer Fluidleitung, wobei das Kupplungsstück eine erste, zweite und dritte Komponente (1, 2, 3) aus vorwiegend schmelzbarem Material, insbesondere thermoplastischem Kunststoff, aufweist, von denen die dritte Komponente (3) mit HDPE eine Schmelzverbindung eingeht und eine unerwünscht hohe Durchlässigkeit und Quellfähigkeit gegenüber Kraftstoff aufweist und mit der ersten Komponente (1) stoff- und formschlüssig verbunden ist, während die zweite Komponente (2) eine höhere Sperrfähigkeit und geringere Quellfähigkeit gegenüber Kraftstoff und eine höhere Festigkeit als die dritte Komponente (3) aufweist, wobei die erste Komponente (1) mit einem Flansch (6) geformt ist, der die dritte Komponente (3) übergreift und mit der dritten Komponente (1, 3) verschmolzen ist, **dadurch gekennzeichnet, daß** die zweite Komponente (2) vollständig oder überwiegend in der dritten Komponente (3) eingeschlossen ist indem die zweite Komponente in die noch plastische Seele der dritten Komponente eingespritzt worden ist, oder die zweite und dritte Komponente (2, 3) vermischt sind, und daß das Verhältnis der Volumina der zweiten und dritten Komponente (2, 3) so gewählt ist, daß der Anteil des Volumens der dritten Komponente (3) am Gesamtvolumen der zweiten und dritten Komponente (2, 3) geringer als der der zweiten Komponente (2) ist.

2. Kupplungsstück nach Anspruch 1, **dadurch gekennzeichnet, daß** die erste Komponente (1) wenigstens eines der Materialien PA, POM, PBT, PEN, PET, PBN, PPS, PPA, PP, LCP, aliphatisches Polyketon und Fluorthermoplast aufweist.

3. Kupplungsstück nach Anspruch 1, **dadurch gekennzeichnet, daß** die zweite Komponente (2) wenigstens eines der Materialien EVOH, PBT, PEN, PET, PBN, POM, PA, PPS, PPA, LCP, aliphatisches Polyketon und Fluorthermoplast oder wenigstens ein Metall oder Glas aufweist.

4. Kupplungsstück nach einem der Ansprüche 1 bis 3, **dadurch gekennzeichnet, daß** die dritte Komponente (3) ein Polyolefin, insbesondere funktionalisiertes PE, aufweist, das mit dem Material des Bauteils (4) verschmelzbar ist.

5. Kupplungsstück nach einem der Ansprüche 1 bis 4, **dadurch gekennzeichnet, daß** die Form der zweiten Komponente (2) in der dritten Komponente (3) so gewählt ist, daß 20 bis 100% des für Kraftstoff durchlässigen Querschnitts der dritten Komponente (3) durch die zweite Komponente (2) abgedeckt sind.

6. Kupplungsstück nach einem der Ansprüche 1 bis 5, **dadurch gekennzeichnet, daß** die zweite und die dritte Komponente (2, 3) ringförmig sind.

7. Kupplungsstück nach Anspruch 6, **dadurch gekennzeichnet, daß** die erste Komponente (1) zu einem Rohr geformt und von der dritten Komponente (2) umgeben ist.

8. Kupplungsstück nach einem der Ansprüche 1 bis 7, **dadurch gekennzeichnet, daß** es gleichzeitig einen Anschlußstutzen, ein Gehäuse eines Ventils, einen Einfüllstutzen oder einen Befestigungsflansch für eine Kraftstoffpumpe bildet.

9. Kupplungsstück nach einem der Ansprüche 1 bis 8, **dadurch gekennzeichnet, daß** die dritte Komponente (3) mit der ersten Komponente (1) teilweise umspritzt ist.

10. Kupplungsstück nach Anspruch 9, **dadurch gekennzeichnet, daß** die Verarbeitungstemperatur der zweiten Komponente (2) kleiner als die Zersetzungstemperatur der dritten Komponente (3) gewählt ist.

## Claims

1. A coupling member, in particular a tube-like socket, for connecting a part (4), provided for receiving or dispensing fuel and made primarily of HDPE, to a fluid line, wherein the coupling member comprises:
a first component, a second component, and a third component (1, 2, 3) comprised primarily of meltable material, in particular thermoplastic material;
wherein the third component (3) is configured to form a heat fusion joint with HDPE and has an undesirably high permeability and swelling capacity relative to fuel;
wherein the third component is connected to the first component (1) by a material bonding action and a positive-locking action;
wherein the second component (2) has a greater blocking capacity and a lower swelling capacity relative to fuel than the third component and a higher strength than the third component (3);
wherein the first component (1) is formed with a flange (6) which engages across the third component (3) and which is connected by heat fusion with the third component (1, 3), **characterised in that**
the second component (2) is embedded completely or mostly in the third component (3);
wherein the second component (2) is injected into the still formable core of the third component (3), or the second and the third component (2, 3) are mixed; and
wherein the ratio of the volumes of the second and third component (2, 3) is chosen in a way that the proportion of the volume of the third component (3) relative to the total volume of the second and third components (2, 3) is lower than the proportion of the volume of the second component (2).

2. The coupling member according to claim 1, **characterised in that** the first component (1) comprises at least one of the materials PA, POM, PBT, PEN, PET, PBN, PPS, PPA, PP, LCP, aliphatic polyketone, and fluoro-thermoplastic material.

3. The coupling member according to claim 1, **characterised in that** the second component (2) comprises at least one of the materials EVOH, PBT, PEN, PET, PBN, POM, PA, PPS, PPA, LCP, aliphatic polyketone, and fluoro-thermoplastic material or at least a metal or glass.

4. The coupling member according to any of claims 1 to 3, **characterised in that** the third component (3) comprises a polyolefin, in particular a functionalised PE, fusible with the material of the part (4) for receiving or dispensing fuel.

5. The coupling member according to any of claims 1 to 4, **characterised in that** the shape of the second component (2) within the third component (3) is selected such that 20 to 100 % of the crosssection of the third component (3), which cross-section is permeable for fuel, are covered by the second component (2).

6. The coupling member according to any of claims 1 to 5, **characterised in that** the second and the third components (2, 3) are annular.

7. The coupling member according to claim 6, **characterised in that** the first component (1) is tubular and is surrounded by the third component (3).

8. The coupling member according to any of claims 1 to 7, **characterised in that** it is also forming at least one of a connecting socket, a housing of a valve, a filling socket, and a fastening flange for a fuel pump.

9. The coupling member according to any of claims 1 to 8, **characterised in that** the third component (3) is partially embedded in the first component (1) by injection molding.

10. The coupling member according to claim 9, **characterised in that** the processing temperature of the second component (2) is chosen to be smaller than the decomposition temperature of the third component (3).

## Revendications

1. Raccord, en particulier tubulure en forme de tube, pour la connexion d'un élément (4) servant à contenir ou à prélever du carburant, principalement en HDPE avec un conduit de fluide, le raccord comportant un premier, deuxième et troisième composant (1, 2, 3) principalement en matériau fusible, en particulier en matière plastique thermoplastique, le troisième composant (3) étant combiné par fusion avec du HDPE et présentant une grande perméabilité et capacité de gonflement indésirables en présence de carburant et étant relié au premier composant (1) par matériau et forme complémentaires, tandis que le deuxième composant (2) présente une capacité d'arrêt plus grande et une capacité de gonflement plus réduite en présence de carburant et une plus grande résistance que le troisième composant (3), le premier composant (1) étant formé avec une bride (6) qui chevauche le troisième composant (3) et est fondue avec le troisième composant (1, 3), **caractérisé en ce que** le deuxième, composant (2) est complètement ou en grande partie enfermé dans le troisième composant (3), le deuxième composant ayant été injecté dans le noyau encore plastique du troisième composant ou **en ce que** les deuxième et troisième composants (2, 3) sont mélangés et **en ce que** la proportion des volumes des deuxième et troisième composants (2, 3) est choisie de telle manière que la part du volume du troisième composant (3) dans le volume total des deuxième et troisième composants (2, 3) est inférieure à celle du deuxième composant (2).

2. Raccord selon la revendication 1, **caractérisé en ce que** le premier composant (1) comporte au moins un des matériaux PA, POM, PBT, PEN, PET, PBN, PPS, PPA, PP, LCP, polycétone aliphatique et thermoplaste fluoré.

3. Raccord selon la revendication 1, **caractérisé en ce que** le deuxième composant (2) comporte au moins un des matériaux EVOH, PBT, PEN, PET, PBN, POM, PA, PPS, PPA, LCP, polycétone aliphatique et thermoplaste fluoré ou au moins un métal ou du verre.

4. Raccord selon l'une quelconque des revendications 1 à 3, **caractérisé en ce que** le troisième composant (3) comporte une polyoléfine, en particulier du PE fonctionnalisé, qui peut être fondu avec le matériau de l'élément (4).

5. Raccord selon l'une quelconque des revendications 1 à 4, **caractérisé en ce que** la forme du deuxième composant (2) dans le troisième composant (3) est choisie de telle manière que 20 à 100 % de la section transversale admissible pour du carburant du troisième composant (3) sont recouverts par le deuxième composant (2).

6. Raccord selon l'une quelconque des revendications 1 à 5, **caractérisé en ce que** le deuxième et le troisième composant (2, 3) sont annulaires.

7. Raccord selon la revendication 6, **caractérisé en ce que** le premier composant (1) est en forme de tube et est entouré par le troisième composant (3).

8. Raccord selon l'une quelconque des revendications 1 à 7, **caractérisé en ce qu'**il forme simultanément une tubulure de raccordement, un boîtier de soupape, une tubulure de remplissage ou une bride de fixation pour une pompe à carburant.

9. Raccord selon l'une quelconque des revendications 1 à 8, **caractérisé en ce que** le troisième composant (3) est en partie entouré par injection par le premier composant (1).

10. Raccord selon la revendication 9, **caractérisé en ce que** la température de transformation du deuxième composant (2) est choisie inférieure à la température de décomposition du troisième composant (3).
